# EUROPEAN PATENT SPECIFICATION

(11) **EP 2 462 559 B1**
(45) Date of publication and mention of the grant of the patent: **19.10.2016**
(21) Application number: 10740111.9
(22) Date of filing: 02.08.2010
(51) Int. Cl.: G06T 7/00

(54) **SYSTEM AND METHOD FOR THREE-DIMENSIONAL PARCEL MONITORING AND ANALYSIS**
SYSTEM UND VERFAHREN ZUR DREIDIMENSIONALEN PAKETÜBERWACHUNG UND -ANALYSE
SYSTÈME ET PROCÉDÉ DE SURVEILLANCE ET D'ANALYSE DE COLIS TRIDIMENSIONNEL

(30) Priority: 05.08.2009 US 231454 P
(43) Date of publication of application: 13.06.2012
(73) Proprietor: Siemens Industry, Inc., Alpharetta, GA 30005-4437 (US)
(72) Inventor: SALEMIZADEH, Abdul Hamid, Burleson Texas 76028 (US)
(74) Representative: Maier, Daniel Oliver
(86) International application number: PCT/US2010/044060
(87) International publication number: WO 2011/017241

(56) References cited:
- WO-A2-00/59648
- WO-A2-2007/117535
- US-A1- 2009 084 716
- US-B1- 6 963 662
- NEWMAN T S ET AL: "A SURVEY OF AUTOMATED VISUAL INSPECTION" COMPUTER VISION AND IMAGE UNDERSTANDING, ACADEMIC PRESS, US LNKD- DOI:10.1006/CVIU.1995.1017, vol. 61, no. 2, 1 March 1995 (1995-03-01), pages 231-262, XP000644611 ISSN: 1077-3142

## Description

### TECHNICAL FIELD

The present disclosure is directed, in general, to parcel handling and monitoring during shipment and delivery of the parcels.

### BACKGROUND OF THE DISCLOSURE

Minimizing damage to packages during shipment is desirable, as is detecting any potential damage as soon as possible.

International application WO2007/117535 A2 discloses a parcel imaging system and method. US6963662 B1 patent specification discloses a method and system for detecting changes in three dimensional shape.

### SUMMARY OF THE DISCLOSURE

Various disclosed embodiments include a system and method for three-dimensional (3D) package monitoring and analysis. A method includes receiving a plurality of images of a parcel from a parcel scanner, and producing and storing a current 3D model of the package from the images. The method includes comparing the current 3D model of the package with a prior 3D model of the package and determining differences between the current 3D model of the package with a prior 3D model of the package. The method includes producing and storing a record of the determined differences, including any differences that exceed one or more predetermined threshold values corresponding to a type of difference.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 depicts an example parcel in accordance with disclosed embodiments;
Figure 2 depicts a simplified block diagram of a system in accordance with disclosed embodiments; and
Figure 3 depicts a process in accordance with disclosed embodiments.

### DETAILED DESCRIPTION

Automated parcel processing equipment in combination with manual processing and physical shipment of packages can efficiently and speedily process packages to route to their destination. This processing can also cause damage to packages. This damage often goes unnoticed until the recipient reports the damage.

Disclosed embodiments include improved systems and methods for monitoring and analyzing the physical condition of packages being shipped, so that damage or potential damage can be automatically detected during transit, allowing customer notification or other remedial actions.

U.S. Pat. No. 5,311,999 describes a tunnel scanner for packages . U.S. Pat. No. 7,145,093 describes a method and system for image processing that includes recognizing and processing written information on a package. U.S. Pat. No. 7,436,979 describes a method and system for image processing that includes scanning and processing of images and sub-images of mail pieces to decode address and other information.

"Parcel", as used herein, refers to postal mail and packages, whether processed by governmental, semi-governmental, or private entities, including but not limited to the United States Postal Service, other national postal services, and commercial parcel delivery and courier services, referred to herein as the "courier".

Various embodiments include a system and method that creates one or more three-dimensional (3D) models of a parcel using images from a parcel scanner. The parcel scanner, which can be implemented using known scanners such as those described in the patents above, scans each parcel as it moves or is transported through the system. Preferably, the parcel is scanned at each processing, sorting, or distribution point during the delivery process.

The system creates 3D models of each parcel by stitching together the multiple parcel images. In a typical case, in accordance with disclosed embodiments, there will be six images, including one image of each side of a box-shaped parcel. The system assigns a side designator to each of the scanned images that can be stored as side-identification information. The system creates a 3D model of the surface images and registers the designated sides to the corresponding sides of the 3D model, *e.g.,* the top surface image is registered as the top surface of 3D model. In various embodiments, the first 3D model created by the system for a specific parcel is designated as the baseline model and thereafter used to indicate the original condition of the package. Each subsequent 3D model created by the system for the said package can be programmatically compared to the baseline model for variation indicating physical alteration or damage to the package.

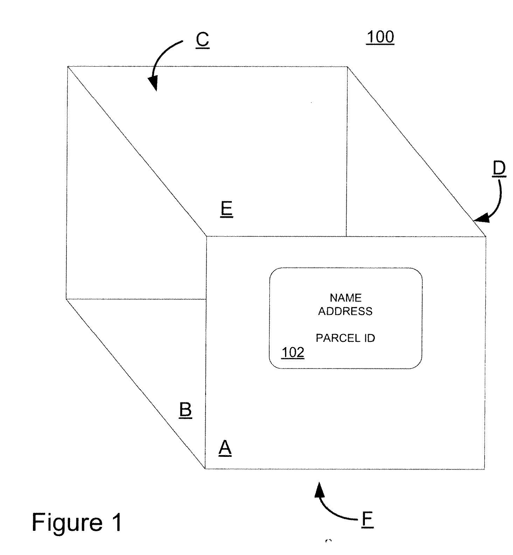

Figure 1 depicts an example parcel 100, with some transparent faces/sides for purposes of illustration. Package 100, in this example, has six sides identified as A, B, C, D, E, F, and each of these sides is defined in relation to each other. For example, from this perspective, face A is the front side, face B is the left side, face C is the back side, face D is the right side, face E is the top, and face F is the bottom. Each of these faces will be scanned and stored as an image from a scanner camera, with the relative side stored as side-identification information. Using the side-identification information, the system can create a 3D model of the package by stitching together the edges of each face image.

While this example shows a basic rectangular parcel, the parcel 100 can be any size or shape as scanned by the tunnel scanner. The term "faces" used herein is not intended to be limited to flat side faces of a typical box parcel, but can include any other outer surfaces of a parcel of any shape.

Figure 1 also shows printed information 102, which can include a pre-printed bar code or other machine code, and can include other printed information that can be recognized using optical-character-recognition (OCR) processes. The printed information 102 can include such information as the name and/or address of the sender or recipient, a package identifier, and package description information such as "breakable", "fragile", "this end up", and other information. While shown on only one side in this example, of course printed information can be located and recognized on multiple different sides of a package.

The system can recognize the printed information on the package, optionally OCR it, and store this information as part of the side-identification information. The system can also recognize and store certain printed patterns such as company logos or printed markings which can be combined with OCR and barcode information for side-identification. Since the system can not control how the package is presented through a tunnel scanner, the system can also calculate a base orientation of the model so that subsequent models can be correctly compared. The system can use the printed information to ensure that successive scans of the same parcel, for example at different processing locations, can be stored in a uniform manner so that side A, for example, is consistently stored in the same orientation each time. In this way, successive scans and models can be directly compared.

The system compares and analyzes the parcel model and side images to determine the physical status of the package. This can include determining if the parcel is physically distorted in some manner which could indicate physical damage, if one or more image faces is marred which could indicate surface anomalies such as water damage, and if one or more of the edges are distorted which could indicate tampering such as opening and resealing.

In some embodiments, the first scan of a parcel is conducted soon after the parcel is received by the courier. In most cases, this is the time at which the parcel is least likely to have any damage, distortion, or other marring, and so this can be considered the "base" image. In other cases, the earliest of the parcel scans is considered the base image, regardless of how long the package has been in transit at that point.

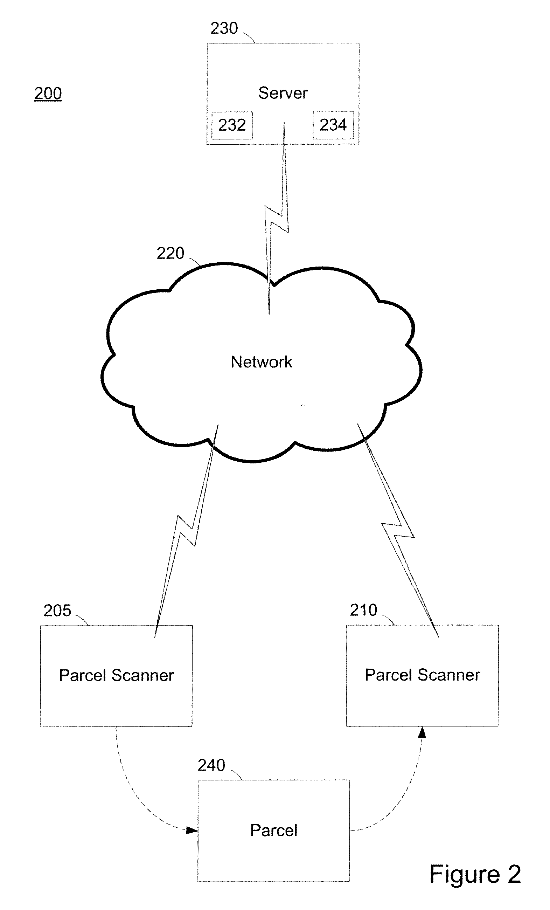

Figure 2 depicts a simplified block diagram of a system 200 in accordance with various embodiments. Here, a plurality (two, in this example) of parcel scanners 205 and 210, which can be implemented as the six-sided tunnel scanners referenced herein, are shown connected to communicate via network 220 with server 230. In this example, scanners 205 and 210 are geographically separate, such as at separate parcel distribution hubs. In this example, assume that a parcel 240 is processed first at parcel scanner 205, and subsequently at parcel scanner 210. Of course, there may be more than two connected parcel scanners in various embodiments, and the parcel may be scanned at more than two of them.

Each of the parcel scanners has at least one camera (or other imaging device), and will typically have four to six cameras so that all six sides of the parcel can be scanned without manipulating the parcel. Of course, fewer cameras can be used if the parcel or cameras are moved so that all sides of the parcel are scanned. The parcel scanners may include other hardware, including an accessible memory for storing scan images, a network interface for connecting with the server system 230 over network 220, and other components. The parcel scanner, as used herein, can include a number of cameras configured to work together on a common parcel. The scanner can include an embedded controller that controls tracking the packages through the scan tunnel and triggers each individual camera to initiate the image scanning at the appropriate time. The parcel scanner can communicate with one ore more server systems, and can transmit parcel images to the servers, including server system 230. Network 220 can be implemented using any public or private network, or other communication system including wired and wireless systems, including the Internet.

Server system 230 can be implemented using one or more data processing systems, including such hardware as one or more processors 232 and accessible storage 234 including volatile and non-volatile memory and magnetic or optical storage mediums, a network interface for connecting over network 220, and other components.

In this example, parcel scanner 210 scans a parcel into, for example, six images. The six images are sent to the server system 230. This system reconstructs a 3D model of the parcel, reorients the model to the base orientation, and stores the model as the current 3D model. In other embodiments, the 3D model can be constructed at the scanner 205 and transmitted to the server system 230.

* If this parcel had been previously modeled, for example at parcel scanner 205, then the system will compare the new model with one or more already stored prior 3D models. The comparison looks for differences in the model, for example within a predetermined variance. If there is a difference in the model's shape, this could signify physical damage. If there is a difference in images such as variation in pixel intensities forming a pattern, this could signify something like water damage. If there is a difference in edges, this could signify tampering. The database will accumulate statistics on distorted parcels to produce a histogram showing at which parcel scanners that the parcels are showing distortions, and associate damaged parcels with the routes from which they arrived at the scanners at which they showed distortions or other damage.

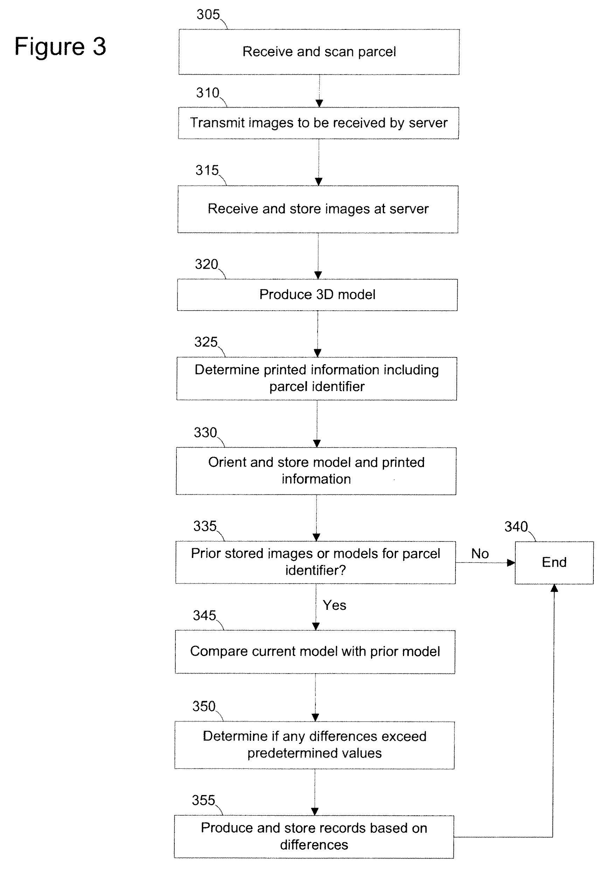

Figure 3 depicts a flowchart of a process in accordance with disclosed embodiments.

A parcel is received and scanned at a first parcel scanner (step 305). The first scanner can be a six-sided tunnel scanner, and the scan produces a plurality of images, typically six images representing each of the six sides of the parcel, that are stored by the scanner. Each image includes side-identification information. The scanner may also perform an OCR or barcode decoding process on the images to determine printed information and produce corresponding digitized information, including in particular a parcel identifier, and the digitized information can include other information, such as the parcel weight, sender, and recipient information. In an alternate embodiment, the scanner produces a 3D model from the images using the side-identification information. In other embodiments, the parcel identifier can be determined in other ways, such as by receiving a wireless or RFID identifier or otherwise.

The scanner transmits the images to be received and processed by the server (step 310). This transmission can also include any printed information, digitized information, and 3D model produced or determined by the scanner.

Once the server has received the images (step 315), they are stored in the server.

The server produces a 3D model from the images using the side-identification information (step 320), or receives it from the scanner. Producing the 3D model can include stitching together the images using the side-identification information, normalizing the size or dimensions of the model, or other tasks.

The server performs an OCR process on the images to determine printed information (step 325) and produce corresponding digitized information, including in particular a parcel identifier, or alternately receives it from the scanner. In other embodiments, the parcel identifier can be determined in other ways, such as by receiving a wireless or RFID identifier or otherwise.

The server orients and stores the 3D model and printed information (step 330). To orient the 3D model, for example, the server may determine which image or side includes the parcel identifier, and designate that side as the first side A, with the parcel identifier oriented in a particular direction; this will then orient the entire model in a consistent manner.

The server determines if there are prior stored images and/or models corresponding to the parcel identifier (step 335). If not, the process ends for that parcel at that time (step 340); the process can repeat with scanning a new parcel at the same scanner, a new parcel at a different scanner, or with the server receiving additional scanned images.

If the server finds prior stored images or models corresponding to the parcel identifier, the server compares the current model with the prior stored model (step 345). In various embodiments, the server can compare the current model with the most recent stored model, or with multiple stored models, to determine changes in the model from the stored model to the current model. Of course, comparison with the most recent stored model will yield the most information about when and where any damage or distortion may have occurred. The parcel, the current 3D model, the prior 3D model(s), and the current and stored images for the parcel are associated with a common parcel identifier.

Since the 3D model was oriented consistently, the current 3D model is oriented to have an orientation consistent with the prior 3D model.

In alternate embodiments, at least some of the comparisons can be performed between the corresponding stored images of the current model and the prior stored model. In these cases, this step can include comparing each of the individual surface images with their corresponding baseline surface image.

In the comparison, the server can perform such tasks as identifying changes in the size or shape of any face of the model, identifying changes in the length or orientation of any edges between the faces, identifying marring, discoloration, or other changes to the color or images on the faces of the model, identifying changes in the location or shape of any edges, seams, or seals of the parcel as represented in the model, changes in the weight of the parcel, and otherwise. The changes can indicate damage has occurred to the parcel, as described herein. By comparing prior and current models of the same parcel, disclosed embodiments provide distinct technical advantages over systems that can only detect if a parcel or product does not conform to predetermined values, such as those systems that detect a non-confirming product among a series of substantially-identical products or packages. Disclosed embodiments can accept and process parcels of any size, shape, or weight, even if these values are not previously known, and determine if any of these parameters have changed between prior and later scans.

The server determines if any differences between the current model and the prior model exceed predetermined values for acceptable change (step 350). These differences can indicate changes in the state of the parcel. This can include applying a rule set indicating the predetermined values for each type of possible difference described herein between the current state and prior state of the package. The rules set can include special or alternate rules for when the printed information includes such handling warnings as "fragile", "breakable", "do not crush", or others, so that at least some of the predetermined values can be based on the printed information. This step can include determining differences between the current surface image of a designated side and a prior image of the same side.

The system produces and stores, and optionally prints or displays, a record of the differences, including any differences that exceed the predetermined values (step 355). This record can be, for example, an entry in a parcel database, an entry on a bill of lading, or otherwise. This step can include storing a requirement or recommendation for action to be taken in response to any changes that exceed the predetermined values. The actions can include, but are not limited to, notifying a customer, redirecting the parcel for examination or repair, investigation of the cause of any damage, making an exception, or otherwise.

As part of this step, the system can also use the parcel identifier and record of changes, along with similar data from other parcels, to produce a report of where and what kind of damage is occurring to parcels in transit. After this step, in some embodiments, the process can end for this parcel at this time (step 340).

Those skilled in the art will recognize that, for simplicity and clarity, the full structure and operation of all systems suitable for use with the present disclosure is not being depicted or described herein. Instead, only so much of the physical systems as is unique to the present disclosure or necessary for an understanding of the present disclosure is depicted and described. The remainder of the construction and operation of the systems disclosed herein may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of a instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs). In particular, computer readable mediums can include transitory and non-transitory mediums, unless otherwise limited in the claims appended hereto.

## Claims

1. A method for three-dimensional (3D) parcel monitoring and analysis, comprising:
receiving a plurality of images of a parcel (100, 240) from a first parcel scanner (210) by a server data processing system (230);
producing and storing a current 3D model of the parcel (100, 240) from the images;
comparing, by the server data processing system (230), the current 3D model of the parcel (100, 240) with a prior 3D model of the parcel (100, 240) produced and stored from a plurality of images of the parcel (100, 240) previously received from a second parcel scanner (205);
determining, by the server data processing system (230), differences between the current 3D model of the parcel (100, 240) with the prior 3D model of the parcel (100, 240); and
producing and storing a record of the determined differences, including any differences that exceed one or more predetermined values corresponding to a type of difference, wherein the one or more predetermined values are based on printed information (102) corresponding to the parcel (100, 240) if the printed information (102) determined from the plurality of images includes handling warnings.

2. A system (200) for three-dimensional (3D) parcel monitoring and analysis, comprising a server data processing system (230) comprising at least a processor (232) and memory (234), and configured to perform the steps of:
receiving a plurality of images of a parcel (100, 240) from a first parcel scanner (210);
producing and storing a current 3D model of the parcel (100, 240) from the images;
comparing the current 3D model of the parcel with a prior 3D model of the parcel (100, 240) produced and stored from a plurality of images of the parcel (100, 240) previously received from a second parcel scanner (205);
determining differences between the current 3D model of the parcel (100, 240) with the prior 3D model of the parcel (100, 240); and
producing and storing a record of the determined differences, including any differences that exceed one or more predetermined values corresponding to a type of difference, wherein the one or more predetermined values are based on printed information (102) corresponding to the parcel (100, 240) if the printed information (102) determined from the plurality of images includes handling warnings.

3. The method of claim 1 or system of claim 2, wherein the type of difference between the current 3D model of the parcel (100, 240) and the prior 3D model of the parcel (100, 240) includes at least one of a difference in the size of a face, a difference in the shape of a face, a difference in the length of an edge between faces, a difference in the location of an edge between faces, a difference in the shape of an edge between faces, a difference in the orientation of an edge between faces, discoloration in a face, marring of a face, a difference in a seams, a difference in a seal, and a difference in a weight of the parcel (100, 240).

4. The method of claim 1 or system of claim 2, wherein the first parcel scanner (210) is a tunnel scanner that produces the plurality of images from a plurality of cameras, the plurality of images depicting different sides (A, B, C, D, E, F) of the parcel (100, 240).

5. The method of claim 1 or system of claim 2, wherein the parcel (100, 240), the current 3D model and the prior 3D model are associated with a common parcel identifier.

6. The method of claim 1 or system of claim 2, wherein the current 3D model is oriented to have an orientation consistent with the prior 3D model.

7. The method of claim 1 or system of claim 2, wherein the differences that exceed one or more predetermined values corresponding to the type of difference indicate damage to the parcel (100, 240).

8. The method of claim 1 or system of claim 2, wherein the server data processing system (230) produces and stores a report indicating that damage occurred to the parcel (100, 240) after the prior 3D model was produced and before the current 3D model was produced.

## Patentansprüche

1. Verfahren zur dreidimensionalen (3D-) Überwachung und Analyse von Paketen, das Folgendes umfasst:
Empfangen mehrerer Bilder von einem Paket (100, 240) aus einem ersten Paketscanner (210) durch ein Serverdatenverarbeitungssystem (230),
Erzeugen und Speichern eines aktuellen 3D-Modells von dem Paket (100, 240) aus den Bildern,
Vergleichen des aktuellen 3D-Modells von dem Paket (100, 240) mit einem vorherigen 3D-Modell von dem Paket (100, 240), das aus mehreren zuvor aus einem zweiten Paketscanner (205) empfangenen Bildern von dem Paket (100, 240) erzeugt und gespeichert wird, durch das Serverdatenverarbeitungssystem (230),
Ermitteln von Unterschieden zwischen dem aktuellen 3D-Modell von dem Paket (100, 240) und dem vorherigen 3D-Modell von dem Paket (100, 240) durch das Serverdatenverarbeitungssystem (230) und
Erzeugen und Speichern eines Datensatzes mit den ermittelten Unterschieden einschließlich aller Unterschiede, die einen oder mehrere vorgegebene Werte überschreiten, welche einem Unterschiedstyp entsprechen, wobei der eine oder die mehreren vorgegebenen Werte auf gedruckten Informationen (102) beruhen, welche dem Paket (100, 240) entsprechen, wenn die aus den mehreren Bildern ermittelten gedruckten Informationen (102) Warnhinweise zum Transport enthalten.

2. System (200) zur dreidimensionalen (3D-) Überwachung und Analyse von Paketen, das ein Serverdatenverarbeitungssystem (230) mit zumindest einem Prozessor (232) und Speicher (234) umfasst und so konfiguriert ist, dass es folgende Schritte durchführt:
Empfangen mehrerer Bilder von einem Paket (100, 240) aus einem ersten Paketscanner (210),
Erzeugen und Speichern eines aktuellen 3D-Modells von dem Paket (100, 240) aus den Bildern,
Vergleichen des aktuellen 3D-Modells von dem Paket mit einem vorherigen 3D-Modell von dem Paket (100, 240), das aus mehreren zuvor aus einem zweiten Paketscanner (205) empfangenen Bildern von dem Paket (100, 240) erzeugt und gespeichert wird,
Ermitteln von Unterschieden zwischen dem aktuellen 3D-Modell von dem Paket (100, 240) und dem vorherigen 3D-Modell von dem Paket (100, 240) und
Erzeugen und Speichern eines Datensatzes mit den ermittelten Unterschieden einschließlich aller Unterschiede, die einen oder mehrere vorgegebene Werte überschreiten, welche einem Unterschiedstyp entsprechen, wobei der eine oder die mehreren vorgegebenen Werte auf gedruckten Informationen (102) beruhen, welche dem Paket (100, 240) entsprechen, wenn die aus den mehreren Bildern ermittelten gedruckten Informationen (102) Warnhinweise zum Transport enthalten.

3. Verfahren nach Anspruch 1 oder System nach Anspruch 2, bei dem der Typ Unterschied zwischen dem aktuellen 3D-Modell von dem Paket (100, 240) und dem vorherigen 3D-Modell von dem Paket (100, 240) einen Unterschied bei der Größe einer Fläche, einen Unterschied bei der Form einer Fläche, einen Unterschied bei der Länge einer Kante zwischen Flächen, einen Unterschied bei Lage einer Kante zwischen Flächen, einen Unterschied bei der Form einer Kante zwischen Flächen, einen Unterschied bei der Ausrichtung einer Kante zwischen Flächen, eine Verfärbung bei einer Fläche, eine Beschädigung einer Fläche, einen Unterschied bei einem Falz, einen Unterschied bei einem Verschluss und/oder einen Unterschied bei einem Gewicht des Pakets (100, 240) umfasst.

4. Verfahren nach Anspruch 1 oder System nach Anspruch 2, bei dem es sich bei dem ersten Paketscanner (210) um einen Tunnelscanner handelt, der die mehreren Bilder über mehrere Kameras erzeugt, wobei die mehreren Bilder verschiedene Seiten (A, B, C, D, E, F) des Pakets (100, 240) darstellen.

5. Verfahren nach Anspruch 1 oder System nach Anspruch 2, bei dem das Paket (100, 240), das aktuelle 3D-Modell und das vorherige 3D-Modell mit einer gemeinsamen Paketkennung verknüpft sind.

6. Verfahren nach Anspruch 1 oder System nach Anspruch 2, bei dem das aktuelle 3D-Modell so ausgerichtet ist, dass seine Ausrichtung mit dem vorherigen 3D-Modell übereinstimmt.

7. Verfahren nach Anspruch 1 oder System nach Anspruch 2, bei dem die Unterschiede, die einen oder mehrere vorgegebene Werte überschreiten, welche dem Unterschiedstyp entsprechen, auf eine Beschädigung des Pakets (100, 240) hinweisen.

8. Verfahren nach Anspruch 1 oder System nach Anspruch 2, bei dem das Serverdatenverarbeitungssystem (230) einen Bericht erzeugt und speichert, der darauf hinweist, dass das Paket (100, 240) beschädigt wurde, nachdem das vorherige und bevor das aktuelle 3D-Modell erzeugt wurde.

## Revendications

1. Procédé de surveillance et d'analyse tridimensionnelles (3D) de colis, consistant :
à faire recevoir, par un système serveur (230) de traitement de données, une pluralité d'images d'un colis (100, 240) provenant d'un premier analyseur (210) de colis ;
à produire, à partir des images, et à mettre en mémoire un modèle 3D actuel du colis (100, 240) ;
à faire comparer, par le système serveur (230) de traitement de données, le modèle 3D actuel du colis (100, 240) avec un modèle 3D préalable du colis (100, 240) produit à partir d'une pluralité d'images du colis (100, 240) reçues précédemment d'un second analyseur (205) de colis et mis en mémoire ;
à faire déterminer, par le système serveur (230) de traitement de données, les différences entre le modèle 3D actuel du colis (100, 240) et le modèle 3D préalable du colis (100, 240), et
à produire et à mettre en mémoire un enregistrement des différences déterminées, notamment toute différence qui dépasse une ou des valeurs prédéterminées correspondant à un type de différence, étant entendu que la ou les valeurs prédéterminées sont basées sur des informations imprimées (102) correspondant au colis (100, 240) si les informations imprimées (102) déterminées à partir de la pluralité d'images comprennent des avertissements sur la manutention.

2. Système (200) de surveillance et d'analyse tridimensionnelles (3D) de colis, comprenant un système serveur (230) de traitement de données comprenant au moins un processeur (232) et une mémoire (234), et configuré pour exécuter les étapes consistant :
à recevoir, d'un premier analyseur (210) de colis, une pluralité d'images d'un colis (100, 240) ;
à produire, à partir des images, et à mettre en mémoire un modèle 3D actuel du colis (100, 240) ;
à comparer le modèle 3D actuel du colis avec un modèle 3D préalable du colis (100, 240) produit à partir d'une pluralité d'images du colis (100, 240) reçues précédemment d'un second analyseur (205) de colis et mis en mémoire ;
à déterminer les différences entre le modèle 3D actuel du colis (100, 240) et le modèle 3D préalable du colis (100, 240), et
à produire et à mettre en mémoire un enregistrement des différences déterminées, notamment toute différence qui dépasse une ou plusieurs valeurs prédéterminées correspondant à un type de différence, étant entendu que la ou les valeurs prédéterminées sont basées sur des informations imprimées (102) correspondant au colis (100, 240) si les informations imprimées (102) déterminées à partir de la pluralité d'images comprennent des avertissements sur la manutention.

3. Procédé selon la revendication 1 ou système selon la revendication 2, dans lesquels le type de différence entre le modèle 3D actuel du colis (100, 240) et le modèle 3D préalable du colis (100, 240) consiste au moins en une différence de taille d'une face, en une différence de forme d'une face, en une différence de longueur d'une arête entre des faces, en une différence d'emplacement d'une arête entre des faces, en une différence de forme d'une arête entre des faces, en une différence d'orientation d'une arête entre des faces, en la décoloration d'une face, en l'avarie d'une face, en une différence au niveau d'une couture, en une différence au niveau d'un scellement ou en une différence de poids du colis (100, 240).

4. Procédé selon la revendication 1 ou système selon la revendication 2, dans lesquels le premier analyseur (210) de colis est un analyseur pour tunnel qui produit la pluralité d'images à partir d'une pluralité de caméras, la pluralité d'images représentant des côtés différents (A, B, C, D, E, F) du colis (100, 240).

5. Procédé selon la revendication 1 ou système selon la revendication 2, dans lesquels le colis (100, 240), le modèle 3D actuel et le modèle 3D préalable sont associés à un identifiant de colis commun.

6. Procédé selon la revendication 1 ou système selon la revendication 2, dans lesquels le modèle 3D actuel est orienté pour avoir une orientation conforme au modèle 3D préalable.

7. Procédé selon la revendication 1 ou système selon la revendication 2, dans lesquels les différences qui dépassent une ou des valeurs prédéterminées correspondant au type de différence indiquent un dommage au colis (100, 240) .

8. Procédé selon la revendication 1 ou système selon la revendication 2, dans lesquels le système serveur (230) de traitement de données produit et met en mémoire un rapport indiquant que le dommage a été occasionné au colis (100, 240) après que le modèle 3D préalable a été produit et avant que le modèle 3D actuel n'ait été produit.
